# EUROPEAN PATENT APPLICATION

(11) **EP 1 879 404 A1**
(43) Date of publication of application: **16.01.2008**
(21) Application number: 06291142.5
(22) Date of filing: 12.07.2006
(51) Int. Cl.: H04Q 7/22

(54) **Method and apparatus for interfacing a fixed/mobile convergence access network with the PS domain of a mobile core network**

(71) Applicant: Alcatel Lucent, 75008 Paris (FR)
(72) Inventor: Desorbay, Eric, 44750 Campbon (FR); Feron, Didier, 44240 La Chapelle sur Erdre (FR); Monchanin, Jean-Pierre, 44600 Saint-Nazaire (FR); Le Marec, Pierre, 44880 Sautron (FR)
(74) Representative: El Manouni, Josiane

(57) **Abstract**

An object of the present invention is a method for interfacing a fixed/mobile convergence Access Network (UMAN/GAN) with the PS domain of a mobile Core Network, said method comprising:
- a step of transferring user data packets using a tunnelling protocol over IP transport between a Network Controller (UNC/GANC) of said Access Network and a PS domain node of said mobile Core Network.

## Description

The present invention generally relates to mobile communication networks.

Detailed descriptions of mobile communication networks can be found in the litterature, in particular in Technical Specifications published by standardisation bodies such as in particular 3GPP (3^{rd} Generation Partnership Project).

It is simply recalled that a mobile communication network is divided into an Access Network (AN) and a Core Network (CN), and a Mobile Station MS has access to mobile services delivered by the Core Network via an Access Network.

Mobile services have traditionally been delivered to Mobile Stations via an Access Network corresponding to a Radio Access Network RAN, allowing relatively high mobility but at relatively high cost for the users.

An example of RAN is GERAN (GSM/EDGE Radio Access Network, where EDGE stands for Enhanced Data rates for GSM Evolution, and GSM stands for Global System for Mobile communications).

It is recalled that the standardized interfaces between GERAN and the GSM/GPRS Core Network, for GERAN A/Gb mode, include A-interface for CS (Circuit-Switched) domain, and Gb-interface for PS (Packet-Switched) domain.

Now there is an evolution towards fixed/mobile convergence allowing mobile services to be delivered to users at lower cost in environments requiring lower mobility, such as in particular indoor environments.

An example of fixed/mobile convergence is UMA/GA (Unlicensed Mobile Access / Generic Access), a description of which can be found in particular in UMA/3GPP specifications (in particular 3GPP TS 43.318 and 3GPP TS 44.318). As indicated in 3GPP TS 43.318 for example, Generic Access to the A/Gb interfaces is an extension of GSM/GPRS mobile services that is achieved by tunnelling Non Access Stratum (NAS) protocols between a Mobile Station and the Core Network over an IP network.

In the example of UMA/GA, the Access Network is called UMAN/GAN (Unlicensed Mobile Access Network / Generic Access Network). In the general case, the Access Network will also be called hereinafter fixed/mobile convergence Access Network.

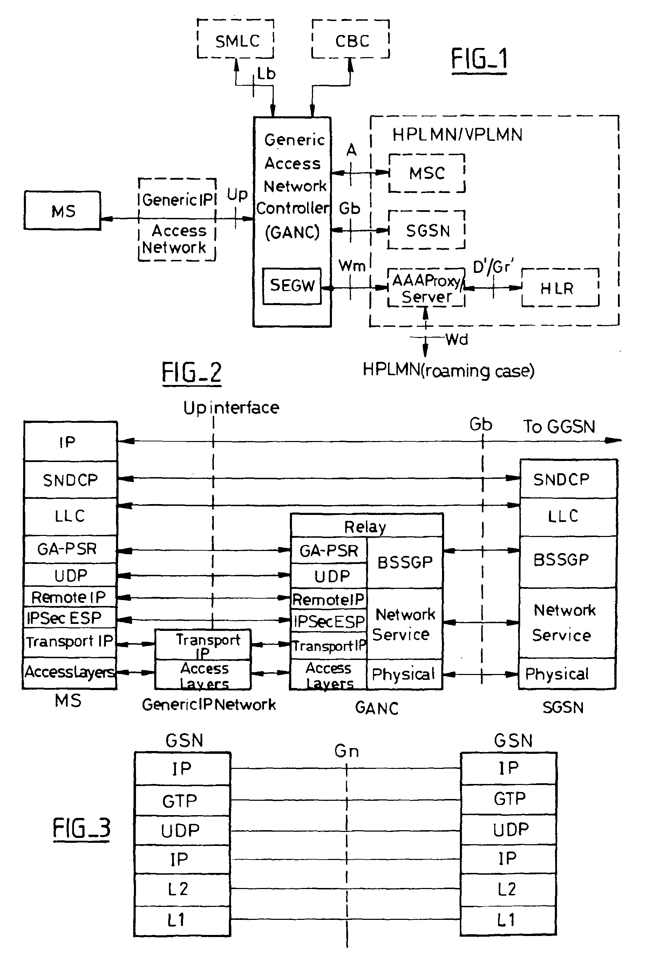

As recalled in figure 1, taken back from 3GPP TS 43.318 for example, the Access Network UMAN/GAN comprises an IP Access Network and a Network Controller UNC/GANC (Unlicensed Network Controller / Generic Access Network Controller). The interface between MS and UNC/GANC is called Up-interface. The UNC/GANC appears to the CN as a BSS (Base Station Subsystem) of GERAN. The UNC/GANC is interconnected with the CN via the standardized interfaces (i.e. A-interface and Gb-interface) defined for GERAN A/Gb mode.

The PS Domain User Plane UMAN/GAN protocol architecture is recalled in figure 2 taken back from 3GPP TS 43.318 for example.

As recalled in figure 2, protocols at the Up-interface include, from lower to higher layers:
- Access Layers protocol,
- Transport IP,
- IP Sec ESP,
- Remote IP,
- UDP (User Datagram Protocol),
- URLC (Unlicensed Radio Link Control)/GA-PSR (Generic Access - Packet Switched Resources).

As recalled in figure 2, protocols at the Gb-interface include:
- Physical Layer protocol,
- Network Service,
- BSSGP (BSS GPRS Protocol).

As recalled in figure 2, protocols at the MS-SGSN interface include:
- LLC (Logical Link Control),
- SNDCP (Sub-Network Dependent Convergence Protocol).

As recalled in figure 2, higher layer protocols at the interface between MS and an Application Server (not illustrated) include, in particular, IP protocol.

A description of the Up-interface protocols that are specific to UMA/GA can be found in particular in UMA/3GPP Technical Specifications (in particular 3GPP TS 43.318 and 3GPP TS 44.318). A description of Gb-interface protocols can be found in particular in 3GPP TS 44.018. A description of protocols at the MS-SGSN interface can be found in particular in 3GPP TS 44.064 and 3GPP TS 44.065.

As recalled in figure 2, the UNC/GANC essentially performs:
- interworking between URLC/GA-PSR protocols at Up-interface, and BSSGP protocol at Gb-interface.

The PS domain user plane CN protocol architecture is recalled in figure 3.

As recalled in figure 3, transport protocols at the Gn-interface between GPRS Support Nodes (GSNs) include, from lower to higher layers:
- L1 Layer protocol,
- L2 Layer protocol,
- IP,
- UDP,
- GTP-U (GPRS Tunneling Protocol- User plane).

As recalled in figure 3, higher layer protocols at the Gn-interface include, in particular, IP protocol.

User data traffic generated by higher layer protocols is tunnelled over IP transport accross the CN PS domain using a GTP-U tunnel set-up at PDP (Packet Data Protocol) context activation.

It is recalled that in the PS domain control plane, higher layer protocols in charge in particular of management of PDP contexts and GTP-U tunnels include:
- Session Management (SM) protocol,
- GTP-C (GPRS Tunneling Protocol - Control plane).

A description of SM protocol can be found in particular in 3GPP TS 24.008. A description of GTP protocol can be found in particular in 3GPP TS 29.060.

In such a context, the present invention recognizes in particular the following problems.

Though UMA/GA is presently an economic alternative for indoor 2G coverage (essentially for voice and low-speed GPRS), a problem is that UMA/GA GPRS access is based on a 2G protocol stack which has a number of disadvantages, in particular:
- Cost of Frame Relay transport, still widely used for the Network Service Layer on Gb interface,
- Gb BSSGP overhead.

Because of these technical limitations, GPRS service over UMA/GA is currently economically viable only for low-speed service.

To overcome these limitations, the following solutions could be used:
- Gb over IP in a classical UMA/GA segregated architecture with distinct UNC/GANC and SGSN nodes,
- collapsed UMA architecture with a combined UNC-PS / SGSN node.

However such solutions in particular have the following drawbacks:
- For proper operation of segregated architecture with Gb over IP, all SGSNs need to be upgraded with Gb over IP functionality,
- Likewise, proper operation of collapsed architecture requires all SGSNs to be upgraded with combined UNC/GANC and SGSN functionality.

It is an object of the present invention to overcome such limitations, while avoiding such drawbacks.

These and other objects are achieved, in one aspect of the present invention, by a method for interfacing a fixed/mobile convergence Access Network (UMAN/GAN) with the PS domain of a mobile Core Network, said method comprising:
- a step of transferring user data packets using a tunnelling protocol over IP transport between a Network Controller (UNC/GANC) of said Access Network and a PS domain node of said mobile Core Network.

In another aspect, said method comprises:
- a step of transferring user data packets using GPRS Tunnelling Protocol (GTP) over IP transport between a Network Controller (UNC/GANC) of said Access Network and a Gateway GPRS Support Node (GGSN) of said mobile Core Network.

In another aspect, said method comprises the steps of:
- performing higher layer control procedures at a Serving GPRS Support Node (SGSN), with higher layer control protocols terminating at said SGSN,
- obtaining by said Network Controller, from said SGSN, information for said tunnelling of user data packets, obtained by said SGSN a a result of performing said higher layer control procedures.

Advantageously said method comprises the steps of:
- performing an inter-SGSN mobility procedure between said SGSN acting as on old SGSN and said Network Controller acting as a new SGSN, to enable said Network Controller to obtain said information from said SGSN,
- aborting said inter-SGSN mobility procedure before completion so that said SGSN keeps control of said higher layer control procedures.

In another aspect, said method comprises the steps of:
- performing said higher layer control procedures at said Network Controller, with said higher layer control protocols terminating at said Network Controller,
- using information obtained by said Network Controller as a result of performing said higher layer control procedures, for said tunnelling of user data packets.

Advantageously said method comprises a step of:
- terminating said higher layer control protocols at said Network Controller, under the control of an Authentication Authorization Accounting (AAA) proxy/server.

Advantageously said method comprises a step of:
- terminating said higher layer control protocols at said Network Controller, under the control of an Authentication Authorization Accounting (AAA) proxy/server for authorization / bandwidth allocation.

Advantageously said method comprises a step of:
- triggering an I-WLAN Wm-interface interaction by a Session Management protocol message to authorize requested bandwidth.

Advantageously said method comprises a step of:
- triggering an I-WLAN Wm-interface interaction by a PDP Context Activation message to authorize requested bandwidth.

Said higher layer control protocols in particular include Session Management protocol, and said higher layer procedures in particular include Packet Data Protocol (PDP) context management.

In another aspect, said method comprises:
- a step of transferring user data packets via a first path using GPRS Tunnelling Protocol (GTP) over IP transport between a Network Controller (UNC/GANC) of said Access Network and a Gateway GPRS Support Node (GGSN) of said mobile Core Network, for high bandwidth sessions,
- a step of transferring user data packets via a second path, wherein said Network Controller (UNC/GANC) is interconnected with a Serving GPRS Support Node (SGSN) of said mobile Core Network via Gb-interface, for low bandwidth sessions.

Advantageously said method comprises:
- a step of proxying session management protocol messages, by said Network Controller, before passing them to a Serving GPRS Support Node (SGSN), to determine if user data packets should be transferred via said first path or via said second path.

Advantageously said method comprises:
- a step of signalling, according to session management protocol, user preference as to transferring user data packets via said first path or via said second path,
- a step of using said signalled information to determine if user data packets should be transferred via said first path or via said second path.

Advantageously said method comprises:
- a step of determining if user data packets should be transferred via said first path or via said second path, using information held by an Authentication Authorization Accounting (AAA) proxy/server.

These and other objects are achieved, in another aspect of the present invention, by network entities such as in particular entity of a fixed/mobile convergence Access Network (such as in particular Network Controller UNC/GANC), and entity of a mobile Core Network (such as in particular PS domain Core Network node such as in particular SGSN), for performing a method according to the present invention.

These and other objects of the present invention will become more apparent from the following description taken in conjunction with the accompanying drawings:
- figure 1 is intended to recall the architecture of UMA/GA,
- figure 2 is intended to recall the PS domain user plane UMAN/GAN protocol architecture,
- figure 3 is intended to recall the PS domain user plane CN protocol architecture,
- figure 4 is intended to illustrate an example of user plane architecture, according to the present invention,
- figure 5 is intended to illustrate the user plane functions performed in a UNC/GANC according to the present invention,
- figure 6 is intended to illustrate a first embodiment of the present invention, for the control plane.

The same elements in different figures are noted with the same references.

In the following description, the case of UMA (with its Network Controller UNC) will be more particularly considered as an example; however the present invention is not limited to this example. The part of the UNC handling PS domain will also be called UNC-PS, and a UNC-PS supporting the evolutions proposed by the present invention will also be called E-UNC-PS.

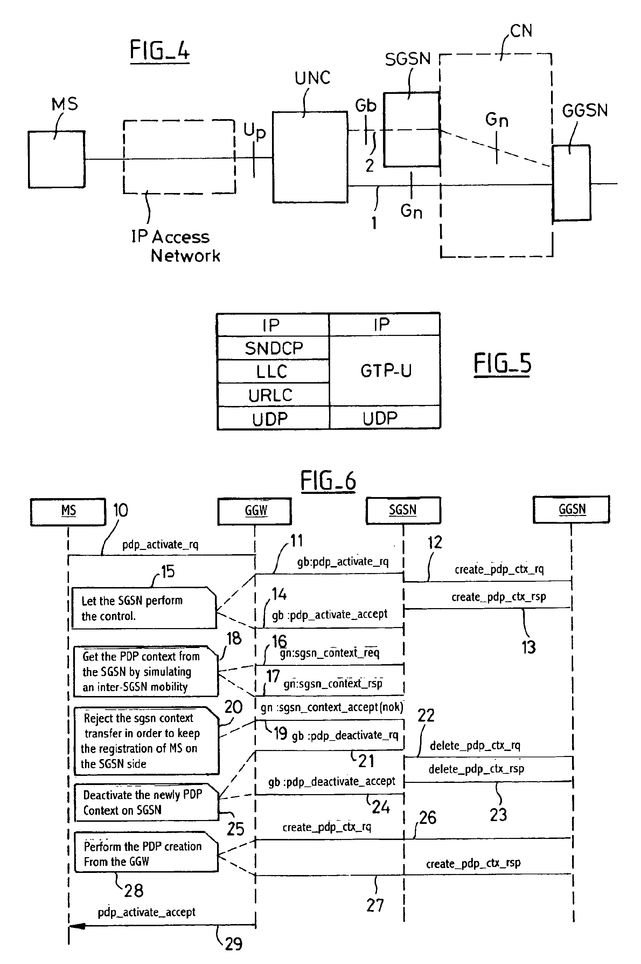

In one aspect, the present invention proposes, in the user plane, to use a path without Gb-interface (i.e. without BSSGP) between UNC and GGSN. Such a path is noted 1 in figure 4, as compared to a classical path, noted 2 in figure 4 and illustrated with dotted lines, using Gb-interface between UNC and SGSN and Gn-interface between SGSN and GGSN. Path 1 is also called fast path, as it enables higher speed services than path 2, also called slow path. The present invention also proposes to use a fast path with Gn-interface between UNC and GGSN.

In another aspect, the present invention proposes that for interfacing a fixed/mobile convergence Access Network (such as in particular UMAN/GAN) with the PS domain of a mobile Core Network CN, user data packets are transferred using a tunnelling protocol over IP transport between a Network Controller (UNC/GANC) of said Access Network and a PS domain node of said mobile Core Network.

In another aspect, the present invention proposes to perform the following user plane functions at a E-UNC-PS, as illustrated in figure 5:
- interworking between URLC/GA-PSR, LLC and SNDCP protocols at Up-interface, and GTP-U protocol at the interface with the CN PS domain,
- relay function at a higher IP layer.

In another aspect, the present invention proposes that a fast path (without Gb-interface) is used only for high-bandwidth session or PDP (Packet Data Protocol), also called F-PDP (fast PDP), whilst low-bandwidth session or PDP, also called S-PDP (slow PDP) go over classical path (with Gb-interface).

Other aspects of the present invention, related to the control plane, will now be disclosed, by reference to different embodiments.

In a first embodiment, illustrated in figure 6, it is proposed that a PDP context is first created at the SGSN (as is the case for a classical UNC), and subsequently retrieved by the E-UNC-PS by an ISRAU like procedure (where ISRAU stands for Inter-SGSN Routing Area Update).

In the example illustrated in figure 6:
- at step 10, the MS sends to the SGSN, according to the SM protocol, a request for the activation of a PDP context (message noted "pdp_activate_rq"),
- at step 11, this request is sent by the UNC to the SGSN over the Gb-interface (message noted "gb:pdp_activate_ rq"),
- at step 12, a request for the creation of a PDP context is sent by the SGSN to the GGSN, according to the GTP-C protocol, over the Gn-interface (message noted "create_pdp_ctx_ rq"),
- at step 13, a response to this request is sent by the GGSN to the SGSN, according to the GTP-C protocol, over the Gn-interface (message noted "create_pdp_ctx_ rsp"),
- at step 14, a response to this request (acceptation), sent by the SGSN to the MS according to the SM protocol, is received by the UNC over the Gb-interface (message noted "gb:pdp_activate_ accept"),
- steps 11 to 14 are also illustrated in figure 6 as corresponding to a step noted 15 where the UNC lets the SGSN perform the control of PDP context activation,
- at step 16, the UNC, simulating an inter-SGSN Routing Area Update procedure (i.e. acting as a new SGSN in such a procedure) sends to the SGSN (acting as an old SGSN in such procedure) according to the GTP-C protocol over the Gn-interface, a request for transfer of PDP context held by the (old) SGSN (message noted "gn:sgsn_context_ req"),
- at step 17, the (old) SGSN sends to the UNC (acting as the new SGSN), according to the GTP-C protocol over the Gn-interface, a response to this request (message noted "gn:sgsn_context_ rsp"),
- steps 16 and 17 are also illustrated in figure 6 as corresponding to a step noted 18 where the UNC gets the PDP context from the SGSN, by simulating an inter-SGSN mobility procedure,
- at step 19, the UNC (acting as the new SGSN) sends to the (old) SGSN, according to the GTP-C protocol over the Gn-interface, a message indicating that this response is not accepted (message noted "gn:sgsn_context_ accept(nok)"),
- step 19 is also illustrated as a step 20 where the UNC rejects the PDP context transfer, in order to keep the control of registration of the MS by the (old) SGSN,
- at step 21, the UNC sends to the SGSN, over the Gb-interface, a request for deactivation of this PDP context according to the SM protocol (message noted "gb:pdp_ deactivate_rq"),
- at step 22, the SGSN sends to the GGSN, according to the GTP-C protocol over the Gn-interface, a request for deletion of this PDP context (message noted "delete_pdp_ctx_rq"),
- at step 23, the GGSN sends to the SGSN, according to the GTP-C protocol over the Gn-interface, a response to this request (message noted "delete_pdp_ctx_rsp"),
- at step 24, the SGSN sends to the UNC, over the Gb-interface, a response to this request (message noted "gb:pdp_deactivate_accept"),
- steps 21 and 24 are also illustrated in figure 6 as corresponding to a step noted 25 of deactivating the (newly activated) PDP context at the SGSN,
- at step 26, the UNC (acting as a SGSN), sends to the GGSN, according to the GTP-C protocol over the Gn-interface, a request for the re-creation of this PDP context (message noted "create_pdp_ctx_rq"),
- at step 27, the GGSN sends to the UNC (acting as SGSN), according to the GTP-C protocol over the Gn-interface, a response to this request (message noted "create_pdp_ctx_rsp"),
- steps 26 and 27 are also illustrated in figure 6 as corresponding to a step noted 28 of re-creating the PDP context at the GGSN, from the UNC (acting as SGSN),
- at step 29, the UNC (acting as SGSN) sends to the MS, according to the SM protocol, a response to the request sent by the MS at setp 10 (message noted "_pdp_activate_accept").

In other words:
- An ISRAU procedure is performed up to the point where the E-UNC-PS has obtained the necessary PDP context information, but it is aborted before completion, so that the SGSN keeps control of the MS.
- Subsequently the E-UNC-PS forges a 24.008 deactivate PDP context message that it encapsulates over Gb to the SGSN. The SGSN deactivates the PDP context, sends back the acknowledgement which the E-UNC-PS keeps locally (the MS is not advised of this proxy interaction).
- At last, the E-UNC-PS re-creates the PDP context to the GGSN.
- In the end, the SGSN still holds the MS for mobility management, but the F-PDP does not go through the SGSN.

In another aspect, it is proposed that the E-UNC-PS proxies the 24.008 Session Management messages before passing them to SGSN over Gb, to determine whether the PDP should be handled as a S-PDP or a F-PDP.

In another aspect, it is proposed that :
- an always-on primary signalling PDP (e.g. for SIP signalling / PTT / Presence, etc.) should be kept on SGSN,
- an RTP voice secondary PDP context should be on SGSN,
- an RTP video secondary PDP should be on E-UNC-PS,
- a MS which is marked for Lawful Interception should be on SGSN.

In another aspect, it is proposed that the E-UNC-PS proxies 24.008 Mobility Management (MM) messages before passing them to SGSN over Gb, notably to force the MS encryption capability to "no encryption", so that the SGSN cannot start ciphering on WLAN access.

In another aspect, it is proposed, for 3GPP LLC proxy, that the E-UNC-PS performs the necessary function to hide the MM and SM proxy behaviour (for example N(U) and CRC re-calculation).

In another aspect, it is proposed, for Legal Interception, that the E-UNC-PS supports the X1 interface with Legal Interception management to be informed of those marked Mobile Stations.

The E-UNC-PS may also support a mode of operation where S-PDP and F-PDP contexts might be active simultaneously.

Optionally the user may have some control on the preferred path, especially in the case where mobility is not supported over the fast path, typically by means of 24.008 Session Management signalling in the Activate PDP Context message indicating whether slow path / fast path or mobility support is preferred.

Another option is the E-UNC-PS support of an enhanced Wm-interface with a AAA (Authentication Authorization Accounting) proxy/server to transport the subscriber per APN (Access Point Name) slow path / fast path or mobility preference information. The Wm-interface between UNC and AAA proxy/server is recalled in figure 1.

The repository of the information might be the AAA proxy/server, or the HLR (Home Location Register) accessible by the AAA proxy/server by means of enhanced 3GPP D'/Gr' interface. The D'/Gr'-interface between AAA proxy/server and HLR is recalled in figure 1.

In a second embodiment, it is proposed that the E-UNC-PS terminates the 3GPP 24.008 MM and SM protocols in a simplified manner, under the control of a AAA proxy/server, possibly connected to the HLR via the D'/Gr'- interface.

The AAA proxy/server can be a dual UMA/I-WLAN (interworking WLAN) AAA proxy/server.

The E-UNC-PS terminates the 24.008 Mobility Management protocol with the help of the AAA proxy/server for authentication.

Two modes of operation can be envisaged for authentication:
- The E-UNC-PS performs the adaptation between the 3GPP 24.008 authentication towards the MS and the I-WLAN authentication procedure towards the AAA proxy/server on Wm interface.
- The E-UNC-PS does not perform the 3GPP 24.008 authentication, in this case relying on the UMA authentication procedure.

Ciphering may optionally be performed if 3GPP 24.008 authentication was performed.

Mobility functions are not performed. Typically, MM timers are given to the MS so that:
- the MS does not perform periodic RAU,
- the MS stays permanently in Ready state.

The E-UNC-PS terminates the 24.008 Session Management protocol with the help of the AAA proxy/server for authorization / bandwidth allocation.

The MS 24.008 Session Management ACTIVATE PDP CTXT message triggers an I-WLAN Wm interaction to authorize requested bandwidth.

For home users, charging is performed at GGSN.

For roamers, the E-UNC-PS may generate 3GPP 32.xxx CDRs to allow inter-operator settlement (when UMA MS accesses an UNC in the V-PLMN, and operators have a roaming agreement for this mode of operation).

As for the above-disclosed first embodiment, the E-UNC-PS may also support Gb interface as for a classical UNC, and a decision between slow path and fast path may be performed.

Typically, roomers could be handled via Gb based on a roamer agreement table for the case where their home network does not have an I-WLAN compatible AAA server accessible for roamers (no Wd interface).

Optionally the user may have some control on the preferred path, especially in the case where mobility is not supported over the fast path, typically by means of 24.008 Session Management signalling in the Activate PDP Context message indicating whether slow path / fast path or mobility support is preferred.

Another option is the E-UNC-PS support of an enhanced Wm interface with the AAA to transport the subscriber (for example per APN) preference information. The repository of the information might be the AAA, or the HLR accessible by the AAA by means of enhanced 3GPP D'/Gr' interface.

The present invention also has for its object network entites for performing a method according to the present invention, according to any of the above described aspects, taken individually or in combination. The present invention in particular has for its object an entity of a fixed/mobile convergence Access Network (such as in particular Network Controller UNC/GANC), and an entity of a mobile Core Network (such as in particular PS domain Core Network node, such as in particular SGSN), for performing a method according to the present invention.

The detailed implementation of the above-mentioned means does not raise any special problem for a person skilled in the art, and therefore such means do not need to be more fully disclosed than has been made above, by their function, for a person skilled in the art.

## Claims

1. A method for interfacing a fixed/mobile convergence Access Network (UMAN/GAN) with the PS domain of a mobile Core Network, said method comprising:
- a step of transferring user data packets using a tunnelling protocol over IP transport between a Network Controller (UNC/GANC) of said Access Network and a PS domain node of said mobile Core Network.

2. A method according to claim 1, comprising:
- a step of transferring user data packets using GPRS Tunnelling Protocol (GTP) over IP transport between a Network Controller (UNC/GANC) of said Access Network and a Gateway GPRS Support Node (GGSN) of said mobile Core Network.

3. A method according to claim 1 or 2, comprising the steps of:
- performing higher layer control procedures at a Serving GPRS Support Node (SGSN), with higher layer control protocols terminating at said SGSN,
- obtaining by said Network Controller, from said SGSN, information for said tunnelling of user data packets, obtained by said SGSN a a result of performing said higher layer control procedures.

4. A method according to claim 3, comprising the steps of:
- performing an inter-SGSN mobility procedure between said SGSN acting as on old SGSN and said Network Controller acting as a new SGSN, to enable said Network Controller to obtain said information from said SGSN,
- aborting said inter-SGSN mobility procedure before completion so that said SGSN keeps control of said higher layer control procedures.

5. A method according to claim 1 or 2, comprising the steps of:
- performing said higher layer control procedures at said Network Controller, with said higher layer control protocols terminating at said Network Controller,
- using information obtained by said Network Controller as a result of performing said higher layer control procedures, for said tunnelling of user data packets.

6. A method according to claim 5, comprising a step of:
- terminating said higher layer control protocols at said Network Controller, under the control of an Authentication Authorization Accounting (AAA) proxy/server.

7. A method according to claim 5, comprising a step of:
- terminating said higher layer control protocols at said Network Controller, under the control of an Authentication Authorization Accounting (AAA) proxy/server for authorization / bandwidth allocation.

8. A method according to claim 7, comprising a step of:
- triggering an I-WLAN Wm-interface interaction by a Session Management protocol message to authorize requested bandwidth.

9. A method according to claim 7, comprising a step of:
- triggering an I-WLAN Wm-interface interaction by a PDP Context Activation message to authorize requested bandwidth.

10. A method according to any of claims 3 to 9, wherein said higher layer control protocols include Session Management protocol, and said higher layer procedures include Packet Data Protocol (PDP) context management.

11. A method according to any of claims 1 to 10, comprising
- a step of transferring user data packets via a first path using GPRS Tunnelling Protocol (GTP) over IP transport between a Network Controller (UNC/GANC) of said Access Network and a Gateway GPRS Support Node (GGSN) of said mobile Core Network, for high bandwidth sessions,
- a step of transferring user data packets via a second path, wherein said Network Controller (UNC/GANC) is interconnected with a Serving GPRS Support Node (SGSN) of said mobile Core Network via Gb-interface, for low bandwidth sessions.

12. A method according to claim 11, comprising:
- a step of proxying session management protocol messages, by said Network Controller, before passing them to a Serving GPRS Support Node (SGSN), to determine if user data packets should be transferred via said first path or via said second path.

13. A method according to claim 11 or 12, comprising:
- a step of signalling, according to session management protocol, user preference as to transferring user data packets via said first path or via said second path,
- a step of using said signalled information to determine if user data packets should be transferred via said first path or via said second path.

14. A method according to any of claims 11 to 13, comprising:
- a step of determining if user data packets should be transferred via said first path or via said second path, using information held by an Authentication Authorization Accounting (AAA) proxy/server.

15. An entity of a fixed/mobile convergence Access Network, in particular Network Controller (UNC /GANC), comprising means for performing a method according to any of claims 1 to 14.

16. An entity of a mobile Core Network , comprising means for performing a method according to any of claims 1 to 14.
